# EUROPÄISCHE PATENTANMELDUNG

(11) **EP 0 816 154 A2**
(43) Veröffentlichungstag der Anmeldung: **07.01.1998**
(21) Anmeldenummer: 97109806.6
(22) Anmeldetag: 17.06.1997
(51) Int. Cl.: B60K 28/10, F01P 11/16

(54) **Fahrzeug mit einer bei überhitztem Fahrzeugmotor selbsttätig ausrückenden Kupplung für einen Antrieb**

(30) Priorität: 26.06.1996 US 670867
(71) Anmelder: DEERE & COMPANY, Moline Illinois 61265-8098 (US)
(72) Erfinder: Peterson, Rudolph Andrew, Jr., Beaver Dam, Wisconsin 53916 (US)
(74) Vertreter: Feldmann, Bernhard

(57) **Zusammenfassung**

Ein Fahrzeug mit einer elektrisch einrückbaren Kupplung (12) zum Einschalten eines vom Fahrzeugmotor aus antreibbaren Abtriebs, einem Verriegelungskreis (16), der auf mindestens eine vorherbestimmbare Fahrzeugbedingung anspricht und beim Vorhandensein dieser Bedingung ein Ausgangssignal ermöglicht, einem mit der Kupplung (12) verbundenen Abtriebsrelais und mit einem zwischen zwei Schaltstellungen in Abhängigkeit von der Motortemperatur verstellbaren Temperaturschalter (60), der in der ersten Schaltstellung, in der die Motortemperatur unterhalb eines vorgegebenen Werts liegt, ein Einrücken der Kupplung erlaubt und in der zweiten Schaltstellung, in der die Motortemperatur oberhalb des vorgegebenen Werts liegt, die Kupplung (12) ausrückt, ist durch einen Widerstand (46) gekennzeichnet, der über eine erste Leitung (22) an dem Verriegelungskreis (16) und über eine zweite Leitung an dem Temperaturschalter (60) angeschlossen ist, an dem auch die Relaisspule (42) des Abtriebsrelais angeschlossen ist.

## Beschreibung

Die Erfindung bezieht sich auf ein Fahrzeug mit einer elektrisch einrückbaren Kupplung zum Einschalten eines vom Fahrzeugmotor aus antreibbaren Abtriebs, einem Verriegelungskreis, der auf mindestens eine vorherbestimmbare Fahrzeugbedingung anspricht und beim Vorhandensein dieser Bedingung ein Ausgangssignal ermöglicht, einem mit der Kupplung verbundenen Abtriebsrelais und mit einem zwischen zwei Schaltstellungen in Abhängigkeit von der Motortemperatur verstellbaren Temperaturschalter, der in der ersten Schaltstellung, in der die Motortemperatur unterhalb eines vorgegebenen Werts liegt, ein Einrücken der Kupplung erlaubt und in der zweiten Schaltstellung, in der die Motortemperatur oberhalb des vorgegebenen Werts liegt, die Kupplung ausrückt.

Insbesondere in der Rasen- und Grundstückspflege einsetzbare Fahrzeuge, in der Regel Kleinschlepper, haben wenigstens einen Abtrieb, zumeist in Form einer Zapfwelle, zum Antreiben eines anzuschließenden Gerätes, wie einen Rasenmäher. Derartige Fahrzeuge sind mit vielerlei Sicherheitsvorkehrungen ausgestattet, die darin bestehen können, dass das Fahrzeug nicht angelassen werden kann, wenn sich das Getriebe in einer Schaltstellung befindet, wenn sich eine Bedienungsperson nicht auf dem Fahrersitz befindet oder, wenn sich ein Schalter für den Antrieb der Zapfwelle nicht in seiner Ausstellung befindet. Verlässt die Bedienungsperson aus irgendeinem Grund den Fahrersitz, dann schaltet sich der Fahrzeugmotor in der Regel automatisch ab. Ein derartiges Fahrzeug, das in dem Dokument EP-B1-0 576 897 offenbart ist, ist zusätzlich mit einer Einrichtung versehen, die den Abtrieb bzw. den Antrieb für eine Zapfwelle ausrückt, wenn die Motortemperatur einen bestimmten Wert überschreitet. Hierdurch soll einer Überhitzung vorgebeugt werden, die bei Zapfwellen getriebenen Rasenmähern leicht auftreten kann. Die Motortemperatur wird von einem Temperaturschalter "gefühlt", der bei normaler Betriebstemperatur offen ist und dann den Zapfwellenbetrieb zulässt. Der Temperaturschalter ist Teil eines bei Überhitzung ansprechenden Stromkreises mit einem Temperaturrelais, das dem Abtriebsrelais zugeschaltet ist und bei geschlossenem Temperaturschalter das Abtriebsrelais in eine Stellung verstellt, in der die Kupplung für den Abtrieb oder die Zapfwelle ausgerückt wird. Ein Temperaturrelais erhöht natürlich die Kosten, die Komplexität und nicht zuletzt das Gewicht einer entsprechenden Verdrahtung. Eine Nachrüstung ist nicht ohne weiteres möglich. Hierzu können zusätzliche Relais oder "Jumper" bzw. Überbrückungen erforderlich werden.

Die der Erfindung zugrunde liegende Aufgabe wird in einer einfacheren Einrichtung zum Abschalten des Abtriebs bei erhöhten Motortemperaturen gesehen. Diese Aufgabe ist durch einen Widerstand gelöst worden, der über eine erste Leitung an dem Verriegelungskreis und über eine zweite Leitung an dem Temperaturschalter angeschlossen ist, an dem auch die Relaisspule des Abtriebsrelais angeschlossen ist. Auf diese Weise wird das Abtriebsrelais über die Spannung des Widerstands gesteuert, da das Ausgangssignal des Verriegelungskreises an das Abtriebsrelais eine Spannung anlegt, die oberhalb einer Mindestaktivierungsspannung liegt, wenn sich der Temperaturschalter in seiner ersten Schaltstellung befindet. Befindet sich andererseits der Temperaturschalter in seiner zweiten oder geschlossenen Schaltstellung, so wird über das Ausgangssignal des Verriegelungskreises an das Abtriebsrelais eine Spannung angelegt, die unterhalb der Mindestaktivierungsspannung liegt. Die am Abtriebsrelais anliegende Spannung hängt damit von der Schaltstellung des Temperaturschalters ab, der somit bei einem Ansteigen der Motortemperatur über einen vorgegebenen Wert den Abtrieb abschaltet bzw. die zugehörige Kupplung ausrückt. Eine Relaissteuerung bzw. ein Temperaturrelais ist nicht mehr erforderlich. Die Einrichtung zum Abschalten des Abtriebs kann damit erheblich einfacher und auch billiger ausgebildet werden.

Vorteilhaft kann der Widerstand einen Thermistor zum Begrenzen der Leistungsverluste bei sich in seiner zweiten Schaltstellung befindlichem Temperaturschalter aufweisen.

Zweckmäßig kann zudem ein Zeitschalter über eine erste Diode an dem Temperaturschalter angeschlossen sein, wobei der Zeitschalter ein vorgewähltes Intervall für Wartezeit besorgt, wenn der Temperaturschalter sich aus seiner ersten Schaltstellung in seine zweite Schaltstellung verstellt. Auf diese Weise hat der Motor genügend Zeit, sich abzukühlen

Schließlich kann die zweite Leitung des Widerstands über eine zweite Diode mit dem Temperaturschalter verbunden sein. Für Nachrüstungen bietet es sich an, dass die erste Diode mit einem ansonsten für ein Temperaturrelais vorgesehenen Stecker verbindbar ist.

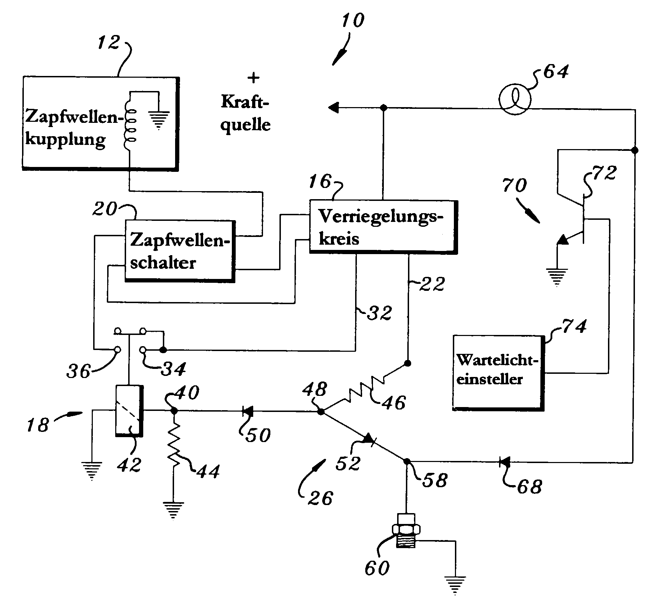

Eine Verdrahtung für eine sich bei Überhitzung des Fahrzeugmotors sich selbsttätig ausrückende Kupplung geht aus der einzigen Figur hervor.

In dieser ist die Verdrahtung mit 10 bezeichnet. Die Verdrahtung findet an einem Fahrzeug, wie beispielsweise einem Kleinschlepper Verwendung, der mit einer Zapfwelle ausgerüstet ist. Die Zapfwelle ist über eine elektrisch aktivierbare Zapfwellenkupplung 12 einschaltbar und dient zum Antrieb einer Bearbeitungsvorrichtung, die bei dem bevorzugten Ausführungsbeispiel als Rasenmäher ausgebildet ist. Man erkennt ferner einen herkömmlichen Verriegelungskreis 16, der an seinem einen Ende an einer zuschaltbaren Kraftquelle am Fahrzeug und an seinem anderen Ende an einem Stromkreis 18 für ein Zapfwellenrelais angeschlossen ist. Der Stromkreis 18 ist über einen ein- und ausschaltbaren Zapfwellenschalter 20 an der Zapfwellenkupplung 12 angeschlossen, um die Zapfwellenkupplung bei eingeschaltetern Zapfwellenschalter einrücken zu können, wenn vorherbestimmte Fahrzeugbedingungen (z. B. muss sich eine Bedienungsperson auf dem Fahrersitz befinden) sich eingestellt haben. Der Verriegelungskreis weist hierzu nicht dargestellte Komponenten, wie einen Sitzschalter, der bei einer auf dem Sitz sitzenden Bedienungsperson geschlossen und ansonsten offen ist, und einen Schalter für die Feststellbremse auf.

Von dem Verriegelungskreis 16 führt eine Ausgangsleitung 22 über einen Stromkreis 26, der bei Überhitzung anspricht, zu dem Stromkreis 18 für das Zapfwellenrelais. In dem Stromkreis 26 herrscht bei stromführender Ausgangsleitung 22 eine positive Spannung, wenn sich bestimmte Bedingungen eingestellt haben, z. B. muss sich eine Bedienungsperson auf dem Fahrerstand befinden und der Schalthebel muss sich in einer Schaltstellung befinden. Eine zuschaltbare und an dem Verriegelungskreis 16 angeschlossene Stromleitung 32 ist mit ihrem anderen Ende an einem Paar als Eingang dienende Anschlüsse 34 an einer Seite eines Zapfwellenrelaisschalters des Stromkreises 18 für das Zapfwellenrelais angeschlossen und speist diese mit der Batteriespannnung.

Ein als Ausgang dienender Anschluss 36 an der anderen Seite des Zapfwellenrelaisschalters verbindet die Leitung 32 mit der Zapfwellenkupplung, wenn der Stromkreis 18 für das Zapfwellenrelais aktiviert und der Zapfwellenschalter 20 eingeschaltet ist. Der Stromkreis 18 ist noch mit einem Steuereingang 40 versehen, der an der einen Seite einer Relaisspule 42 angeschlossen ist. Die andere Seite der Relaisspule 42 ist geerdet. Ein parallel geschalteter Widerstand 44 von etwa 235 Ohm ist zwischen dem Steuereingang und Masse vorgesehen. Wenn nun eine Spannung an dem Steuereingang herrscht, die über einer Mindestarbeitsspannung liegt, zieht das Relais an und schließt die Verbindung zwischen dem Eingangsanschluss 34 und dem Ausgangsanschluss 36. Die Mindestarbeitsspannung für den Relaisstromkreis 18 beträgt etwa 8 Volt bei einem 12 Volt System.

Der auf Überhitzung ansprechende Stromkreis 26 hat noch einen Widerstand 46, der sich zwischen der Ausgangsleitung 22 und einem Anschluss 48 befindet. Eine Diode 50 ist zwischen dem Anschluss 48 und dem Steuereingang 40 für das Relais vorgesehen. Eine Sperrdiode 52 ist zwischen den Anschluss 48 und einem Anschluss 58 geschaltet, der an einem Temperaturschalter 60 an einem Kühlwassermantel für den Verbrennungsmotor angeschlossen ist. Liegt nun die Temperatur des Verbrennungsmotors unterhalb eines vorgegebenen Maximalwerts, dann ist der Temperaturschalter 60 offen. Steigt die Temperatur nun über die maximale Betriebstemperatur, dann schließt der Schalter 60 und legt den Anschluss 58 an Masse an. Der Spannungsabfall am Widerstand 46 ist, wenn der Anschluss 58 über den Schalter 60 geerdet ist, ausreichend, damit die Spannung an dem Steuereingang 40 für das Zapfwellenrelais unter die Mindestbetriebsspannung fallen kann. Dadurch wird das Relais deaktiviert und die Zapfwellenkupplung ausgerückt.

Ein Anzeigelicht 64 für Wartezeit ist mit einer Seite an die zuschaltbare Kraftquelle und mit der anderen Seite über eine Sperrdiode 68 an den Anschluss 58 für den Temperaturschalter angeschlossen. Das Anzeigelicht 64 geht an, wenn die Motortemperatur über den Maximalwert ansteigt und der Anschluss 58 geerdet wird. Ein Zeitkreis 70 für das Wartelicht ist mit einem npn Transistor 72 ausgerüstet, dessen Emitter geerdet, dessen Kollektor an die zweite Seite des Anzeigelichts 64 und dessen Basis an einem Wartelichteinsteller 74 angeschlossen ist. Der Zeitkreis gewährleistet eine Mindestwartezeit, wobei der Intervall von der Umgebungstemperatur abhängt. Die Mindestzeitspanne variiert unmittelbar mit der Temperatur.

Vorzugsweise ist der Widerstand 46 als ein Hochleistungsthermistor mit einem positiven Temperaturkoeffizienten und einem Nennwiderstand in der Größenordnung von 40 Ohm ausgebildet. Der Nennwiderstand des Thermistors ist ausreichend niedrig, so dass der Spannungsabfall am Widerstand bei der Aktivierung des Zapfwellenrelais klein genug ist, um die Spannung an dem Steuereingang 40 ausreichend über die Mindestbetriebsspannung am Zapfwellenrelais zu halten, wenn die Leitung 22 bei offenem Schalter 60 stromführend ist. Steigt die Motortemperatur über die maximale Betriebstemperatur an, dann schließt der Schalter 60 und legt den Anschluss 58 an Masse an, wodurch ein Stromfluss mit niedrigem Widerstand von dem Anschluss 48 über die Diode 52 zur Masse entsteht. Der Spannungsabfall an dem Widerstand 46 verringert den Spannungsstand an dem Steuereingang 40 unterhalb der Mindestbetriebsspannung mit der Folge, dass das Zapfwellenrelais deaktiviert und die Zapfwellenkupplung ausgerückt wird. Hierdurch wird der Antrieb für die Bearbeitungsvorrichtung abgeschaltet. Der Thermistor 46 heizt und vergrößert den Widerstandswert, solange der Temperaturschalter 60 geschlossen ist, um den Stromverbrauch des Stromkreises 26 bei abgeschalteter Zapfwelle zu reduzieren. Wenn der Motor abkühlt, öffnet der Schalter 60 wieder, so dass der Stromkreis 18 für das Zapfwellenrelais wieder aktiviert werden kann, wozu der Zapfwellenschalter 20 zunächst in seine Ausstellung und danach in seine Anstellung verstellt werden muss.

Bei anderen Ausführungen ist der Anschluss 48 als Relaisstecker für ein Temperaturrelais ausgebildet. Dieses Temperaturrelais ist nun durch die Verdrahtung 26 ersetzt. Der geschlossene Weg durch die Zapfwellenkupplung 12 erfolgt durch den Stecker mit der Verdrahtung ohne das Erfordernis für eine Überbrückung oder ein Temperaturrelais.

## Patentansprüche

1. Fahrzeug mit einer elektrisch einrückbaren Kupplung (12) zum Einschalten eines vom Fahrzeugmotor aus antreibbaren Abtriebs, einem Verriegelungskreis (16), der auf mindestens eine vorherbestimmbare Fahrzeugbedingung anspricht und beim Vorhandensein dieser Bedingung ein Ausgangssignal ermöglicht, einem mit der Kupplung (12) verbundenen Abtriebsrelais und mit einem zwischen zwei Schaltstellungen in Abhängigkeit von der Motortemperatur verstellbaren Temperaturschalter (60), der in der ersten Schaltstellung, in der die Motortemperatur unterhalb eines vorgegebenen Werts liegt, ein Einrücken der Kupplung erlaubt und in der zweiten Schaltstellung, in der die Motortemperatur oberhalb des vorgegebenen Werts liegt, die Kupplung (12) ausrückt, gekennzeichnet durch einen Widerstand (46), der über eine erste Leitung (22) an dem Verriegelungskreis (16) und über eine zweite Leitung an dem Temperaturschalter (60) angeschlossen ist, an dem auch die Relaisspule (42) des Abtriebsrelais angeschlossen ist.

2. Fahrzeug nach Anspruch 1, dadurch gekennzeichnet, dass der Widerstand (46) einen Thermistor zum Begrenzen der Leistungsverluste bei sich in seiner zweiten Schaltstellung befindlichem Temperaturschalter (60) aufweist.

3. Fahrzeug nach Anspruch 1, dadurch gekennzeichnet, dass ein Zeitschalter (74) über eine erste Diode (68) an dem Temperaturschalter (60) angeschlossen ist, wobei der Zeitschalter (74) ein vorgewähltes Intervall für Wartezeit besorgt, wenn der Temperaturschalter (60) sich aus seiner ersten Schaltstellung in seine zweite Schaltstellung verstellt.

4. Fahrzeug nach einem oder mehreren der vorherigen Ansprüche, dadurch gekennzeichnet, dass die zweite Leitung des Widerstandes (46) über eine zweite Diode (52) mit dem Temperaturschalter (60) verbunden ist.

5. Fahrzeug nach Anspruch 3, dadurch gekennzeichnet, dass die erste Diode (68) mit einem ansonsten für ein Temperaturrelais vorgesehenen Stecker verbindbar ist.
